# EUROPÄISCHE PATENTSCHRIFT

(11) **EP 0 646 488 B1**
(45) Veröffentlichungstag und Bekanntmachung des Hinweises auf die Patenterteilung: **03.03.1999**
(21) Anmeldenummer: 94114365.3
(22) Anmeldetag: 13.09.1994
(51) Int. Cl.: B60M 1/18

(54) **Fahrdrahtendklemme**
Contact wire end clamp
Pince pour terminaison de fil de contact

(30) Priorität: 30.09.1993 DE 4333446
(43) Veröffentlichungstag der Anmeldung: 05.04.1995
(73) Patentinhaber: SIEMENS AKTIENGESELLSCHAFT, 80333 München (DE)
(72) Erfinder: Uremovic, Nicola, D-91052 Erlangen (DE); Menhorn, Hermann, D-23879 Mölln (DE)

(56) Entgegenhaltungen:
- EP-A- 0 052 176
- DE-A- 2 238 683
- DE-B- 1 173 509

## Beschreibung

Die Erfindung betrifft eine Fahrdrahtendklemme mit einem Klemmenkörper, an dem wenigstens eine Klemmbacke mittels wenigstens einer Schraube gehalten ist.

Derartige Fahrdrahtendklemmen sind z.B. aus der EP-B-0 052 176 bekannt. Die bekannten Fahrdrahtendklemmen werden bei Streckentrennern elektrischer Bahnen zum Abfangen der Enden eines Fahrdrahtes, zum Beiklemmen eines kurzen Fahrdrahtstückes sowie zum Anklemmen der Auflaufkufe (untere Kufe) eines Funkenhorns (aus Fahrdraht gebogenen Einstellbügels) eingesetzt. Die vom Pantographen beschliffenen Einstellbügel stehen unter Spannung und unterliegen dadurch nicht nur einem mechanischen Abrieb sondern auch einer durch Lichtbogenbildung verursachten elektrischen Abtragung. Der im Bereich des Streckentrenners auftretende verstärkte Abrieb führt zu Unebenheiten in der Befahrungsebene, die zusammen mit dem Befahren durch riefenhaltige Schleifstücke an diesen Stellen starke Funkenbildungen und damit eine weitere Vergrößerung des elektrischen Abriebs hervorrufen. Bei einem Austausch der Einstellbügel haben die neuen Einstellbügel volles Profil, wohingegen die Fahrdrähte, die nicht ausgetauscht werden, bereits teilweise abgefahren sind. Der hierdurch entstehende Höhenunterschied an der Übergangsstelle zwischen Fahrdrahtende und Einstellbügel wird bisher mit Schleifgeräten und Handfeilen solange abgetragen, bis der Fahrdrahtspiegel (Fläche, an welche der Pantograph entlanggleitet) an dieser Stelle eine ebene Fläche bildet.

Durch die DE-A-22 38 683 ist weiterhin ein Streckentrenner für Oberleitungen bekannt. Der bekannte Streckentrenner umfaßt gemäß einer ersten in den FIG 1 bis 3 der DE-A-22 38 683 dargestellten Ausführungsform eine Fahrdrahtendklemme, die als einteilige Preßklemme ausgebildet ist. Die Preßklemme hat einen nach unten offenen Klemmkanal, in welchem durch Verpressen der Preßklemme der Kopf eines Fahrdrahtes festgeklemmt wird. Durch das Verpressen der Preßklemme wird eine nicht lösbare Schwalbenschwanz-Verbindung hergestellt.

Eine zweite Ausführungsform des Streckentrenners, die in den FIG 4 bis 6 der DE-A-22 38 683 dargestellt ist, weist eine Verbindungsklemme auf, die aus zwei Klemmbacken besteht. Bei der Verbindungsklemme ist über den die Verbindungsklemme tragenden Abschnitt eines Bolzens eine längsgeschlitzte, exzentrische Hülse geschoben, die sich bei geöffneter Verbindungsklemme auf dem Bolzen drehen läßt. Für eine Änderung des Fahrdrahtniveaus wird die Verbindungsklemme durch Lösen ihrer Schrauben gelockert und dann die Hülse gedreht. Die Exzentrizität der Hülse führt dazu, daß bei einer Drehung der Hülse beide Klemmbacken der Verbindungsklemme gleichzeitig in ihrer Höhenlage verändert werden. Damit ändert sich die Höheneinstellung der Verbindungsklemme bezüglich eines zum Fahrdraht senkrecht angeordneten zylindrischen Körpers, der Teil des Streckentrenners ist.

Aufgabe der folgenden Erfindung ist es, eine Fahrdrahtendklemme zu schaffen, durch die ein anzuklemmender Einstellbügel bzw. ein beizuklemmender Fahrdraht auf einfache Weise in seiner Höhenlage an einen bestehenden Fahrdraht, bzw. an eine bestehende Stromschiene angepaßt werden kann.

Die Aufgabe wird erfindungsgemäß durch die Merkmale des Anspruchs 1 gelöst. Vorteilhafte Ausgestaltungen der Erfindung sind in den Unteransprüchen beschrieben.

Die Fahrdrahtendklemme nach Anspruch 1 umfaßt einen Klemmenkörper, an dem wenigstens eine Klemmbacke mittels wenigstens einer Schraube gehalten ist. Der Klemmenkörper weist eine tieferliegende Klemmfläche auf, in deren Bereich wenigstens eine der Klemmbacken am Klemmenkörper höhenverstellbar angeordnet ist. Die höhenverstellbare Klemmbacke ist in einer Vertiefung, die im Bereich der Klemmfläche im Klemmenkörper angeordnet ist, vertikal verschiebbar geführt.

Bei der erfindungsgemäßen Fahrdrahtendklemme ist also wenigstens eine Klemmbacke höhenverstellbar. Dadurch kann auf einfache Weise die Höhenlage eines anzuklemmenden Einstellbügels (aus Fahrdraht gefertigten Funkenhorns) bzw. eines beizuklemmenden Fahrdrahtes eingestellt werden. Der anzuklemmende Einstellbügel bzw. der beizuklemmende Fahrdraht kann innerhalb kürzester Zeit an die Höhenlage des bereits bestehenden Fahrdrahtes bzw. der bereits bestehenden Stromschiene angepaßt werden. Bei Streckentrennern ist mit der Fahrdrahtendklemme nach Anspruch 1 sowohl die Erstmontage als auch der Austausch von Einstellbügeln auf einfache Weise möglich. Zeitaufwendige Schleifarbeiten an den Unterkanten der Einstellbügel (Auflaufkufe des Funkenhorns) sind damit nicht erforderlich.

Für Rillen-Fahrdrähte bzw. für aus Rillen-Fahrdraht gebogene Einstellbügel ist eine Ausführungsform gemäß Anspruch 3 besonders vorteilhaft, da bei dieser Weiterbildung der erfindungsgemäßen Fahrdrahtendklemme der Bereich der Klemmstelle außerhalb des Fahrdrahtspiegels liegt, so daß dieser nicht beschädigt wird und eine erhöhte Abnutzung und Funkenbildung zuverlässig verhindert wird. Darüber hinaus wird eine bei der Klemmung mögliche Knickung des Fahrdrahtes in die waagrechte Ebene verlegt. Eine solche Knickung des Fahrdrahtes stört - im Gegensatz zu einer senkrechten Knickung, die in diesem Bereich zu einem unerwünschten Springen des Pantographen führt - jedoch die Stromabnahme durch den Pantographen nicht. Ein Nacharbeiten einer eventuell entstehenden waagrechten Knickung ist deshalb nicht erforderlich.

Eine Fahrdrahtendklemme nach Anspruch 5 ermöglicht eine besonders einfache und damit schnell auszuführende Höhenanpassung des angeklemmten Einstellbügels bzw. des beigeklemmten Fahrdrahtes an den bereits bestehenden Fahrdraht. In vorteilhafter Weise ist darüber hinaus durch die Langlöcher in einem relativ großen Verstellbereich eine stufenlose Höheneinstellung des Einstellbügels möglich.

Die Erfindung sowie weitere vorteilhafte Ausgestaltungen werden im folgenden anhand eines Ausführungsbeispiels näher erläutert. Es zeigen:
- FIG 1: einen Klemmenkörper der erfindungsgemäßen Fahrdrahtendklemme,
- FIG 2: die an einem Fahrdrahtende montierte Fahrdrahtendklemme nach der Erfindung,
- FIG 3: einen Schnitt durch die Fahrdrahtendklemme gemäß FIG 2 entlang der Linie III-III.

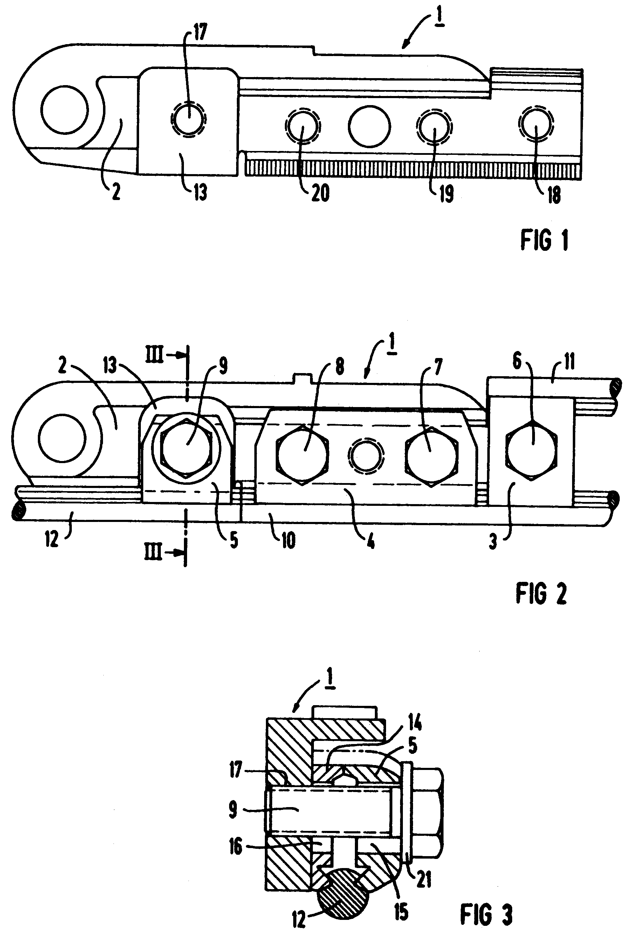

In den FIG 1 bis 3 ist mit 1 ein Klemmenkörper der erfindungsgemäßen Fahrdrahtendklemme bezeichnet, wie sie z.B. in Streckentrennern für Fahrleitungen elektrischer Bahnen eingesetzt werden. Bei derartigen Streckentrennern sind die Enden zweier Fahrdrähte über je eine Fahrdrahtendklemme und ein an dieser gelagertes Abfangstück an zwei Isolierstoffgleitleisten befestigt.

Der Klemmenkörper 1 weist eine tieferliegende Klemmfläche 2 auf. Im Bereich der Klemmfläche 2 sind drei Klemmbacken 3, 4 und 5 mittels Schrauben 6 bis 9 am Klemmenkörper 1 gehalten.

Zum Abfangen des Fahrdrahtes wird sein Ende 10 mittels der Klemmbacke 4 am Klemmenkörper 1 angeklemmt. An dem Klemmenkörper 1 der Fahrdrahtendklemme ist dem befahrenden Fahrdraht durch die Klemmbacke 3 ferner ein kurzes Fahrdrahtstück 11 beigeklemmt, um einen weichen Übergang beim Befahren durch den Stromabnehmer zu erzielen.

Die Klemmbacke 5 dient zum Anklemmen einer Auflaufkufe 12 (untere Kufe) eines Funkenhorns (aus Fahrdraht gebogenen Einstellbügels). Zur einfachen und genauen Anpassung der Auflaufkufe 12 an die Höhenlage des abgespannten Endes 10 vom Fahrdraht ist die Klemmbacke 5 erfindungsgemäß höhenverstellbar ausgebildet.

Die Höhenverstellbarkeit der Klemmbacke 5 wird erfindungsgemäß dadurch erreicht, daß der Klemmenkörper 1 im Bereich seiner Klemmfläche 2 eine Vertiefung 13 aufweist, in der die Klemnbacke 5 vertikal verschiebbar geführt ist. Im dargestellten Ausführungsbeispiel ist zwischen der höhenverstellbaren Klemmbacke 5 und dem Klemmenkörper 1 eine mit der Klemmbacke 5 korrespondierende Gegenbacke 14 angeordnet, die ebenfalls in der Vertiefung 13 vertikal verschiebbar geführt ist. In der Klemmbacke 5 sowie in der Gegenbacke 14 sind Langlöcher 15 und 16 zur Aufnahme der Schraube 9 angeordnet. Zusammen mit einer Gewindebohrung 17 in der Vertiefung 13 des Klemmenkörpers 1 wird sowohl die stufenlose vertikale Verschiebbarkeit als auch die sichere Halterung der Klemmbacke 5 sowie der Gegenbacke 14 am Klemmenkörper 1 sichergestellt.

Die Klemmbacken 3 und 4 weisen demgegenüber Rundbohrungen auf, in die die Schrauben 6 bis 8 einsteckbar sind. Die Schraube 6 der Klemmbacke 3 wird in einer im Klemmenkörper 1 angeordneten Gewindebohrung 18 und die Schrauben 7 und 8 der Klemmbacke 4 werden in ebenfalls im Klemmenkörper 1 angeordneten Gewindebohrungen 19 und 20 geführt. Im vorliegenden Ausführungsbeispiel sind die Klemmbacken 3 und 4 - im Gegensatz zur Klemmbacke 5 - also nicht höhenverstellbar.

Bei der gezeigten Fahrdrahtendklemme sind die Klemmbacke 5 und die Gegenbacke 14 zur Aufnahme eines Rillen-Fahrdrahtes ausgebildet (siehe FIG 3).

In FIG 3 ist die gemeinsame obere Position der Klemmbacke 5 und der Gegenbacke 14 strichpunktiert dargestellt. Zwischen dem Kopf der Schraube 9 und der Klemmbacke 5 ist zur Abdeckung des Langloches 15 eine Beilagscheibe 21 eingefügt.

## Patentansprüche

1. Fahrdrahtendklemme mit einem Klemmenkörper (1), an dem wenigstens eine Klemmbacke (3-5) mittels wenigstens einer Schraube (6-9) gehalten ist,
**dadurch gekennzeichnet, daß**
der Klemmenkörper (1) eine tieferliegende Klemmfläche (2) aufweist, in deren Bereich wenigstens eine der Klemmbacken (3-5) am Klemmenkörper (1) höhenverstellbar angeordnet ist, wobei die höhenverstellbare Klemmbacke (5) in einer Vertiefung (13), die im Bereich der Klemmfläche (2) im Klemmenkörper (1) angeordnet ist, vertikal verschiebbar geführt ist.

2. Fahrdrahtendklemme nach Anspruch 1,
**dadurch gekennzeichnet, daß**
zwischen der höhenverstellbaren Klemmbacke (5) und dem Klemmenkörper (1) eine mit der Klemmbacke (5) korrespondierende Gegenbacke (14) angeordnet ist.

3. Fahrdrahtendklemme nach Anspruch 2,
**dadurch gekennzeichnet, daß**
mittels der höhenverstellbaren Klemmbacke (5) und ihrer korrespondierenden Gegenbacke (14) ein Rillen-Fahrdraht (12) in seinen beiden Rillen klemmbar ist.

4. Fahrdrahtendklemme nach Anspruch 2,
**dadurch gekennzeichnet, daß**
die höhenverstellbare Klemmbacke (5) und die korrespondierende Gegenbacke (14) einstückig nach Art eines Klemmbügels ausgebildet ist.

5. Fahrdrahtendklemme nach einem der Ansprüche 2 bis 4,
**dadurch gekennzeichnet, daß**
die höhenverstellbare Klemmbacke (5) und die korrespondierende Gegenbacke (14) jeweils ein Langloch (15, 16) zur Aufnahme einer Schraube (9) aufweisen.

## Claims

1. Contact wire end clamp having a clamping body (1) on which at least one clamping jaw (3-5) is held by at least one screw (6-9), characterised in that the clamping body (1) has a deeper-seated clamping surface (2), in the region of which at least one of the clamping jaws (3-5) is arranged in a vertically adjustable manner on the clamping body (1), with the vertically adjustable clamping jaw (5) being guided in a vertically shiftable manner in a hollow (13) which is arranged in the clamping body (1) in the region of the clamping surface (2).

2. Contact wire end clamp according to claim 1, characterised in that arranged between the vertically adjustable clamping jaw (5) and the clamping body (1) is a counter-jaw (14), which corresponds to the clamping jaw (5).

3. Contact wire end clamp according to claim 2, characterised in that by means of the vertically adjustable clamping jaw (5) and its corresponding counter-jaw (14), a grooved contact wire (12) can be clamped in its two grooves.

4. Contact wire end clamp according to claim 2, characterised in that the vertically adjustable clamping jaw (5) and the corresponding counter-jaw (14) are constructed in one piece in the manner of a clamping clip.

5. Contact wire end clamp according to one of the claims 2 to 4, characterised in that the vertically adjustable clamping jaw (5) and the corresponding counter-jaw (14) each have an elongated hole (15, 16) for receiving a screw (9).

## Revendications

1. Pince pour terminaison de fil de contact comprenant un corps (1) de pince, auquel au moins une mâchoire (3 à 5) de serrage est retenue au moyen d'au moins une vis (6 à 9),
caractérisée en ce que
le corps (1) de pince comporte une surface (2) de serrage en contrebas et dans la région de laquelle l'une des mâchoires (3 à 5) de serrage est montée réglable en hauteur sur le corps (1) de pince, la mâchoire de serrage (5) réglable en hauteur étant guidée à coulissement vertical dans une cavité (13) ménagée dans le corps (1) de pince dans la région de la surface (2) de serrage.

2. Pince pour terminaison de fil de contact suivant la revendication 1,
caractérisée en ce que
il est prévu, entre la mâchoire (5) de serrage réglable en hauteur et le corps (1) de pince, une contre-mâchoire (14) correspondant à la mâchoire (5) de serrage.

3. Pince pour terminaison de fil de contact suivant la revendication 2,
caractérisée en ce que
un fil de contact (12) rainuré peut être serré par ses deux rainures au moyen de la mâchoire (5) de serrage réglable en hauteur et de sa contre-mâchoire (14) correspondante.

4. Pince pour terminaison de fil de contact suivant la revendication 2,
caractérisée en ce que
la mâchoire (5) de serrage réglable en hauteur et la contre-mâchoire (14) correspondante sont constituées d'une seule pièce à la manière d'un serre-câble.

5. Pince pour terminaison de fil de contact suivant l'une des revendications 2 à 4,
caractérisée en ce que
la mâchoire (5) de serrage réglable en hauteur et la contre-mâchoire (14) correspondante ont chacune une boutonnière (15, 16) de réception d'une vis (9).
